# EUROPEAN PATENT APPLICATION

(11) **EP 4 618 447 A1**
(43) Date of publication of application: **17.09.2025**
(21) Application number: 25162753.5
(22) Date of filing: 10.03.2025
(51) Int. Cl.: H04B 10/532, H04J 14/06, H04Q 11/00

(54) **DUAL-POLARIZATION ALIGNMENT**

(30) Priority: 15.03.2024 US 202418607308
(71) Applicant: Nokia Solutions and Networks Oy, 02610 Espoo (FI)
(72) Inventor: Houtsma, Vincent, New Providence, 07974 (US); Van Veen, Doutje, New Providence, 07974 (US)
(74) Representative: IP HILLS NV

(57) **Abstract**

Various example embodiments for supporting optical communications in an optical communication system may be configured to support dual-polarization alignment for dual-polarization communications within an optical communication network. Various example embodiments for supporting dual-polarization alignment, within an optical communication network supporting optical communications from a transmitter (121, 200, 510) to a receiver (111, 300, 400, 520) based on dual polarizations including a first polarization and a second polarization, may be configured to support dual-polarization alignment to the dual polarizations at the receiver based on communication of a data segment such that a first portion of the data segment is communicated based on the first polarization and a second portion of the data segment is communicated based on the first polarization and the second polarization.

## Description

### TECHNICAL FIELD

Various example embodiments relate generally to communication systems and, more particularly but not exclusively, to supporting optical communications in optical communication systems.

### BACKGROUND

Various communications technologies may be used to support communications in various types of communication systems.

Optical communication networks have been deployed in various communication systems to increase bandwidth available to support communications via the communication systems. The optical communication networks continue to evolve to meet the ever-increasing demand for bandwidth, which has led to major advancements in various aspects of optical communication networks. These advancements include advancements in the passive optical network (PON) portion of the optical fiber network, which has been the most cost-sensitive part of the optical fiber network. Traditionally, PONs have been based on (polarization insensitive) intensity modulation with direct detection (IM-DD) which, thus far, has been the most cost-effective technology for implementing the PON. For the most part, advancements in the PON have, thus far, relied on adopting technologies initially developed for less cost-sensitive parts of the network, and applying these technologies to the PON where, after some time, the associated components for these technologies become high volume and, therefore, lower cost such that adoption within the PON is feasible. For example, a 50G IM-DD PON that was recently standardized will use advanced digital signal processing (DSP) which was adopted from 50 Gbaud PAM4 data center technology, and, additionally, a 100G IM-DD PON using even more complex DSP seems feasible as well. However, eventually, IMIDO PONs will be limited by dispersion (e.g., chromatic dispersion (CD)), because dispersion scales with the square of the bit-rate and generally cannot be completely mitigated, and power budget is limited since doubling the baud-rate results in large excess penalties.

Given the limitations of IM-DD PONs by further increasing the bit-rate as discussed above, different dimensions are being explored in order to further scale bandwidth within the IM-DD PONs. One option is to stack multiple wavelengths in order to enable higher bandwidths. However, the number of wavelengths that can be used will be limited since operating IM/DD systems using four or more wavelength channels and at a narrow wavelength grid close to zero-dispersion results in non-linearities that cause large penalties (e.g., four wave mixing (FWM)). Additionally, using wavelengths on a wider grid takes up a larger wavelength window, which is relatively difficult in PON because many of the wavelengths are occupied by previous generation(s) of PON that might be operating on the same fiber.

### SUMMARY

The scope of protection sought for various example embodiments is set out by the independent claims. The embodiments and features described in this specification that do not fall within the scope of the independent claims, if any, are to be interpreted as examples useful for understanding various example embodiments.

Amongst others, it is an object of example embodiments to enable fast alignment to the polarization channel at the burst mode receiver at the optical line terminal, OLT.

This object is achieved, according to a first example aspect of the present disclosure, a transmitter configured to support dual-polarization transmissions using a first polarization and a second polarization, wherein the transmitter is configured to transmit a data segment toward a receiver, wherein the transmitter is configured to transmit a first portion of the data segment toward the receiver using the first polarization and to transmit a second portion of the data segment toward the receiver using the first polarization and the second polarization. In at least some example embodiments, the transmitter is configured to transmit the data segment toward the receiver using a burst mode transmission. In at least some example embodiments, the data segment is a preamble for the burst mode transmission. In at least some example embodiments, the transmitter is configured to transmit the data segment toward the receiver using a continuous mode transmission. In at least some example embodiments, the data segment is a polarization alignment data segment. In at least some example embodiments, the transmitter is configured to transmit the first portion of the data segment and the second portion of the data segment toward the receiver using a common wavelength. In at least some example embodiments, the first polarization and the second polarization originate from a common transmit clock. In at least some example embodiments, transmission of the first portion of the data segment begins before transmission of the second portion of the data segment begins. In at least some example embodiments, the transmitter includes a laser source, a first modulator configured to modulate the data segment with the first polarization to form a first optical signal, a second modulator configured to modulate the data segment with the second polarization to form a second optical signal, and a combiner configured to combine the first optical signal and the second optical signal to form a combined optical signal for transmission toward the receiver. In at least some example embodiments, an apparatus comprises a transmitter configured to support dual-polarization transmissions using a first polarization and a second polarization, wherein the transmitter is configured to transmit a data segment toward a receiver, wherein the transmitter is configured to transmit a first portion of the data segment toward the receiver using the first polarization and to transmit a second portion of the data segment toward the receiver using the first polarization and the second polarization. In at least some example embodiments, an apparatus comprises means for transmitting, by a transmitter toward a receiver using a first polarization, a first portion of a data segment and means for transmitting, by the transmitter toward the receiver using the first polarization and a second polarization, a second portion of the data segment.

According to a second example aspect of the present disclosure, there is provided a method comprising transmitting, by a transmitter toward a receiver using a first polarization, a first portion of a data segment and transmitting, by the transmitter toward the receiver using the first polarization and a second polarization, a second portion of the data segment.

According to a third example aspect of the present disclosure, there is provideda receiver configured to support reception of dual-polarization communications based on a pair of dual polarizations including a first polarization and a second polarization, wherein the receiver is configured to align to the dual polarizations based on reception of a first portion of a data segment communicated using the first polarization and based on reception of a second portion of the data segment communicated using the first polarization and the second polarization. In at least some example embodiments, the receiver is configured to initiate an alignment to the dual polarizations based on reception of the first portion of the data segment communicated using the first polarization and to further refine the alignment to the dual polarizations based on reception of the second portion of the data segment communicated using the first polarization and the second polarization. In at least some example embodiments, the receiver is configured to initiate an alignment to the dual polarizations based on reception of the first portion of the data segment communicated using the first polarization and to maintain the alignment to the dual polarizations based on reception of the second portion of the data segment communicated using the first polarization and the second polarization. In at least some example embodiments, the receiver is configured to begin tracking of the dual polarizations during reception of the second portion of the data segment communicated using the first polarization and the second polarization. In at least some example embodiments, the data segment is received as part of a burst mode transmission, wherein the data segment is a preamble for the burst mode transmission. In at least some example embodiments, the data segment is received as part of a continuous mode transmission, wherein the data segment is a polarization alignment data segment. In at least some example embodiments, the first portion of the data segment and the second portion of the data segment are received on a common wavelength. In at least some example embodiments, the first portion of the data segment is received before the second portion of the data segment is received. In at least some example embodiments, the data segment is associated with transmission of a first data burst and a second data burst, wherein the receiver is configured to support locking of a first clock and data recovery circuit of the receiver to the first data burst during reception of the first portion of the data segment communicated using the first polarization and locking of a second clock and data recovery circuit of the receiver to the second data burst during reception of the first portion of the data segment communicated using the first polarization. In at least some example embodiments, an apparatus comprises a receiver configured to support reception of dual-polarization communications based on a pair of dual polarizations including a first polarization and a second polarization, wherein the receiver is configured to align to the dual polarizations based on reception of a first portion of a data segment communicated using the first polarization and based on reception of a second portion of the data segment communicated using the first polarization and the second polarization. In at least some example embodiments, an apparatus comprises means for receiving, by a receiver configured to support dual-polarization communications based on a pair of dual polarizations including a first polarization and a second polarization, a first portion of a data segment communicated using the first polarization and a second portion of the data segment communicated using the first polarization and the second polarization and means for aligning, by the receiver, to the dual polarizations based on reception of the first portion of the data segment communicated using the first polarization and based on reception of the second portion of the data segment communicated using the first polarization and the second polarization.

According to a fourth example aspect of the present disclosure, there is provided a method comprising receiving, by a receiver configured to support dual-polarization communications based on a pair of dual polarizations including a first polarization and a second polarization, a first portion of a data segment communicated using the first polarization and a second portion of the data segment communicated using the first polarization and the second polarization and aligning, by the receiver, to the dual polarizations based on reception of the first portion of the data segment communicated using the first polarization and based on reception of the second portion of the data segment communicated using the first polarization and the second polarization.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network (PON) including an optical line terminal (OLT) and a set of optical network units (ONUs) configured to support dual-polarization communications;
FIG. 2 depicts an example embodiment of a dual-polarization burst mode transmitter, for an ONU, which is configured to support burst mode polarization alignment for dual-polarization communications;
FIG. 3 depicts an example embodiment of a dual-polarization burst mode receiver, for an OLT, which is configured to support burst mode polarization alignment for dual-polarization communications;
FIG. 4 depicts an example embodiment of a dual-polarization burst mode receiver, for an OLT, which is configured to support burst mode polarization alignment for dual-polarization communications;
FIG. 5 depicts an example embodiment of an optical communication system configured to support polarization alignment for dual-polarization communications;
FIG. 6 depicts an example embodiment of a method for use by a transmitter for supporting polarization alignment for dual-polarization communications;
FIG. 7 depicts an example embodiment of a method for use by a receiver for supporting polarization alignment for dual-polarization communications; and
FIG. 8 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting optical communications in an optical communication system may be configured to support dual-polarization alignment for dual-polarization communications within an optical communication network. Various example embodiments for supporting dual-polarization alignment, within an optical communication network supporting optical communications from a transmitter to a receiver based on dual polarizations including a first polarization and a second polarization, may be configured to support dual-polarization alignment to the dual polarizations at the receiver based on communication of a data segment such that a first portion of the data segment is communicated based on the first polarization and a second portion of the data segment is communicated based on the first polarization and the second polarization (e.g., initiating alignment at the receiver based on the first portion of the data segment and further aligning to the dual polarizations or maintaining alignment to the dual polarizations at the receiver based on the second portion of the data segment). Various example embodiments for supporting dual-polarization alignment for dual-polarization communications within an optical communication network may be configured to support dual-polarization alignment based on a transmitter configured to transmit the first portion of the data segment toward the receiver using the first polarization and to transmit the second portion of the data segment toward the receiver using the first polarization and the second polarization. Various example embodiments for supporting dual-polarization alignment for dual-polarization communications within an optical communication network may be configured to support dual-polarization alignment based on a receiver configured to begin to align to the dual polarizations based on reception of the first portion of the data segment communicated using the first polarization and to further refine the alignment to the dual polarizations (where full alignment is not achieved based on the first portion of the data segment) or to maintain alignment to the dual polarizations (where full alignment is achieved based on the first portion of the data segment) based on reception of the second portion of the data segment communicated using the first polarization and the second polarization and, further, configured to track the dual polarizations during the remainder of the optical transmission (e.g., during the remainder of the burst where the optical transmission is an optical burst transmission).

Various example embodiments for supporting dual-polarization alignment for dual-polarization communications within an optical communication network may be configured to support dual-polarization alignment within various optical communication contexts which may be supported within the optical communication network. For example, various example embodiments for supporting dual-polarization alignment for dual-polarization communications may be configured to support dual-polarization alignment within the context of communications based on direct detection or communications based on coherent detection. For example, various example embodiments for supporting dual-polarization alignment for dual-polarization communications may be configured to support dual-polarization alignment within the context of communications based on burst mode transmissions or communications based on continuous mode transmissions. For example, various example embodiments for supporting dual-polarization alignment for dual-polarization communications may be configured to support dual-polarization alignment implemented in the electrical domain, implemented in the optical domain, or implemented in a combination of the electrical domain and the optical domain. It will be appreciated that, while at least some such example embodiments for dual-polarization alignment may be applied within various types of optical communication networks based on various optical communication capabilities (e.g., direct detection systems or coherent detection systems, burst mode transmission based systems or continuous mode transmission based systems, and so forth), various aspects of at least some such example embodiments may be further understood by considering such example embodiments within a particular context and, accordingly, at least some such example embodiments are primarily presented herein within the context of a passive optical network employing burst mode transmission with intensity modulation with direction detection; however, it will be appreciated that application of such example embodiments within the context of a passive optical network employing burst mode transmission with intensity modulation with direction detection may be further understood by first considering various aspects of optical communication systems as discussed further below.

Another option explored to further scale bandwidth within the IM-DD PONs is to use polarization as a dimension to double the bandwidth, as is done in coherent technology as well. To keep further increasing PON rates in a sustainable manner, multiple wavelengths and dual-polarization may be used together (e.g., using dual-polarization on each wavelength channel). For example, application of dual wavelengths and dual-polarization in a PON using 100G wavelengths enables a 400G IM-DD TDM-PON (i.e., 2x2x100G = 400G IM-DD TDM-PON). When polarization multiplexed signals travel through the transmission channel, the polarization rotates, so that polarization needs to be tracked continuously at the receiver. In the continuous mode downstream from the OLT to the ONU, polarization alignment has a relatively long period of time within which to align to the two different polarizations at the ONU receiver; however, in the burst mode upstream from the ONU to the OLT, polarization alignment needs to be achieved in a relatively short period of time in order to minimize the overhead in the upstream direction of the PON. As discussed further below, various example embodiments presented herein enable fast alignment to the polarization channels at the burst mode receiver at the OLT.

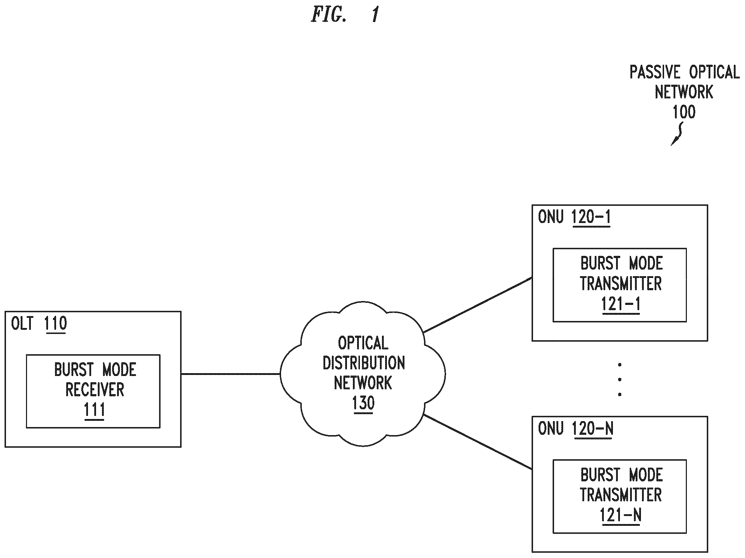

Various example embodiments for supporting optical communications in an optical communication system may be configured to support burst mode polarization alignment for dual-polarization communications within a passive optical network (PON) including an optical line terminal (OLT) serving a set of optical network units (ONUs). Various example embodiments for supporting burst mode polarization alignment within a PON may be configured to support burst mode polarization alignment in the upstream direction from an ONU to an OLT within a PON. Various example embodiments for supporting burst mode polarization alignment in the upstream direction from an ONU to an OLT may be configured to support alignment to the polarizations at the OLT by enabling the ONU to transmit a preamble on only a first polarization of the dual polarizations to enable fast alignment of the receiver on the OLT to that first polarization (and, thus, also to the second polarization given the orthogonal nature of the dual polarizations) and then continuing transmission of the preamble on both of the polarizations of the dual polarizations to enable further alignment of the receiver on the OLT to both the first polarization and the second polarization of the dual polarizations, so that alignment to the dual polarizations may be achieved, maintained, and tracked over the remainder of the upstream burst from the ONU to the OLT. Various example embodiments for supporting burst mode polarization alignment in the upstream direction from an ONU to an OLT may be configured to support locking of the clock and data recovery (CDR) elements for the dual polarizations to each other at the OLT in order to improve or even optimize the overall burst mode polarization alignment performance. Various example embodiments for supporting burst mode polarization alignment within a PON may be configured to support burst mode polarization alignment within the context of an intensity modulation / direct detection (IM-DD) based PON, although it will be appreciated that various example embodiments for supporting burst mode polarization alignment may be applied within various other types of PONs. It will be appreciated that these and various other example embodiments of supporting burst mode dual-polarization alignment for dual-polarization communications within a PON may be further understood by way of reference to FIG. 1, which illustrates an example embodiment of a PON configured to support burst mode polarization alignment for dual-polarization communications in the PON.

FIG. 1 depicts an example embodiment of a passive optical network (PON) including an optical line terminal (OLT) and a set of optical network units (ONUs) configured to support dual-polarization communications.

The PON 100 may be configured to provide network access to a set of customers, based on optical communications, in various contexts and based on various technologies. For example, the PON 100 may operate as a point-to-multipoint (P2MP) data distribution system configured to provide broadband network access over "the last mile" for customers (e.g., the final portion of a telecommunications network that supports communications for customers, including delivering communications to the customers and supporting communications from the customers). For example, the PON 100 may operate using various types of PON technologies and various PON standards (e.g., the G.9804 standard for 50G PON). For example, the PON 100 may be based on direct detection (e.g., based on intensity modulation with direct detection (IM-DD) or other suitable types of direct detection techniques). It will be appreciated that the PON 100 may be used in various other contexts, configured based on various other PON technologies and/or PON standards, or the like, as well as various combinations thereof.

The PON 100 may include various communication elements configured to support optical communications. The PON 100 includes an optical line terminal (OLT) 110 and a set of optical network units (ONUs) 120-1 - 120-N (collectively, ONUs 120) connected via an optical distribution network (ODN) 130. The PON 100 may be configured to support downstream (DS) communications from the OLT 110 to the ONUs 120 via the ODN 130 and upstream (US) communications from the ONUs 120 to the OLT 110 via the ODN 130. The PON 100, as discussed further below, may be configured to support DS communications from the OLT 110 to the ONUs 120 and US communications from the ONUs 120 to the OLT 110 based on application of dual-polarization to one or more wavelengths to provide various combinations of wavelengths and polarizations. It will be appreciated that the PON 100 may include various other elements (which have been omitted for purposes of clarity).

The OLT 110 is configured to support communications between the ONUs 120 and one or more upstream networks (omitted for purposes of clarity). The OLT 110 may be located in a central location, such as a central office (CO) or other suitable location. For example, the one or more upstream networks may include one or more core communication networks configured to support communications of the OLT 110 and, thus, of the ONUs 120. For example, the one or more upstream networks may include the Internet, data center networks, enterprise networks, or the like, as well as various combinations thereof. For example, the OLT 110 may be configured to forward data received from the one or more upstream networks downstream toward the ONUs 120 via the ODN 130 and to forward data received from the ONUs 120 via the ODN 130 upstream toward the one or more upstream networks. The OLT 110, as discussed further below, may be configured to support DS communications to the ONUs 120 and US communications from the ONUs 120 based on application of dual-polarization to one or more wavelengths to provide various combinations of wavelengths and polarizations. The OLT 110 includes a burst mode receiver 111 configured to support polarization alignment for use of dual-polarization in reception of burst mode communications upstream at the OLT 110 from the ONUs 120. It will be appreciated that the OLT 110 may include various other elements configured to support optical communications within the PON 100.

The ONUs 120 each are configured to support communications between the OLT 110 and one or more downstream networks or devices (omitted for purposes of clarity). The ONUs 120 may be located at respective user premises or other suitable locations. For example, the one or more downstream networks or devices for an ONU 120 may include one or more local area networks (LANs) of the customer, one or more communication devices of the customer (e.g., a modem, a router, a switch, a set top box, a smart television, a gaming system, a computer, a smartphone, or the like, as well as various combinations thereof). For example, an ONU 120 may be configured to forward data received from the OLT 110 via the ODN 130 downstream toward one or more downstream networks or devices and to forward data received from the one or more downstream networks or devices upstream toward the OLT 110 via the ODN 130. The ONUs 120, as discussed further below, may be configured to support DS communications from the OLT 110 and US communications to the OLT 110 based on application of dual-polarization to one or more wavelengths to provide various combinations of wavelengths and polarizations. The ONUs 120-1 - 120-N includes burst mode transmitters 121-1 - 121-N (collectively, burst mode transmitters 121) configured to support polarization alignment for use of dual-polarization in transmission of burst mode communications upstream from the ONUs 120 to the OLT 110. It will be appreciated that the ONUs 120 may include various other elements configured to support optical communications within the PON 100.

The ODN 130 may be a data distribution system configured to support communications between the OLT 110 and the ONUs 120, including DS communications from the OLT 110 to the ONUs 120 and US communications from the ONUs 120 to the OLT 110. The ODN 130, for purposes of clarity, is simply depicted as an optical fiber or set of optical fibers configured to support propagation of optical signals downstream from the OLT 110 to the ONUs 120 and upstream from the ONUs 120 to the OLT 110; however, it will be appreciated that the ODN 130 may be implemented using various different components which may be arranged in various different configurations. For example, the ODN 130 may include various passive optical components (e.g., optical fibers, optical couplers, optical splitters, and the like) which do not require power to distribute data signals between the OLT 110 and the ONUs 120. For example, the ODN 130 may be implemented using a branching configuration or other suitable P2MP configurations. It will be appreciated that the ODN 130 may include various other elements for supporting communications between the OLT 110 and the ONUs 120.

The PON 100 is configured to support communications between the OLT 110 and the ONUs 120 based on application of dual-polarization to one or more wavelengths to provide various combinations of wavelengths and polarizations that may support various numbers of optical channels, thereby providing flexibility in the data rates supported in the downstream direction and the upstream direction in the PON 100. In the PON 100, when dual-polarization is applied, the polarization rotates as the polarization multiplexed signals travel through the transmission channel, such that the polarization needs to be aligned and continuously tracked at the receiver (namely, at the ONUs 120 for DS communications and at the OLT 110 for US communication) in order to properly receive the data transmitted via the transmission channel. Additionally, for upstream communications from the ONUs 120 to the OLT 110, the polarization alignment needs to operate in burst mode since burst mode is used by the ONUs 120 for upstream communications. In the continuous mode downstream from the OLT 110 to the ONUs 120, polarization tracking has a relatively long period of time within which to align to the two different polarizations at the ONU receiver; however, in the burst mode upstream from the ONUs 120 to the OLT 110, polarization alignment needs to be achieved in a relatively short period of time in order to minimize the overhead in the upstream direction of the PON.

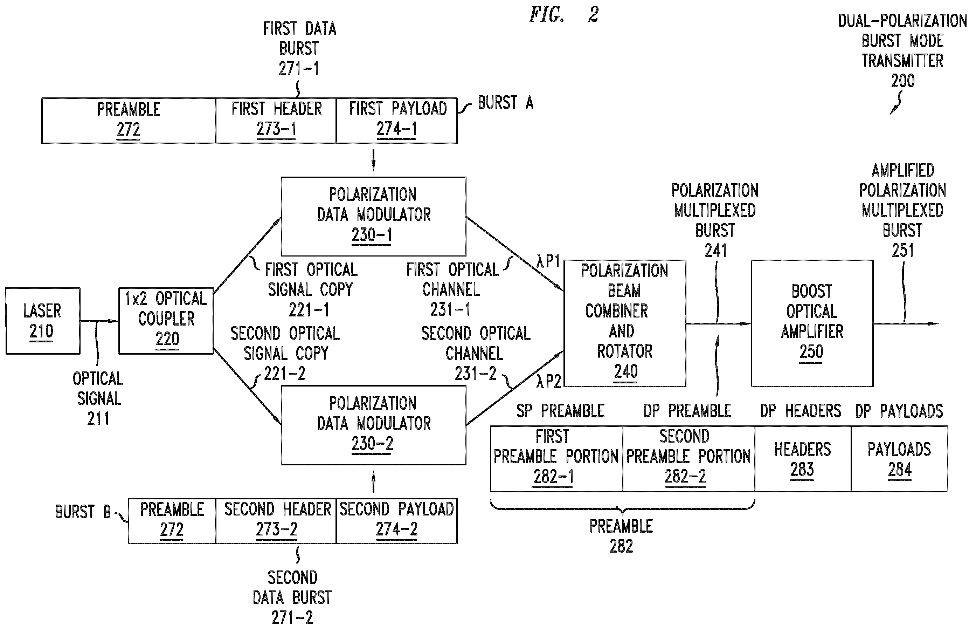

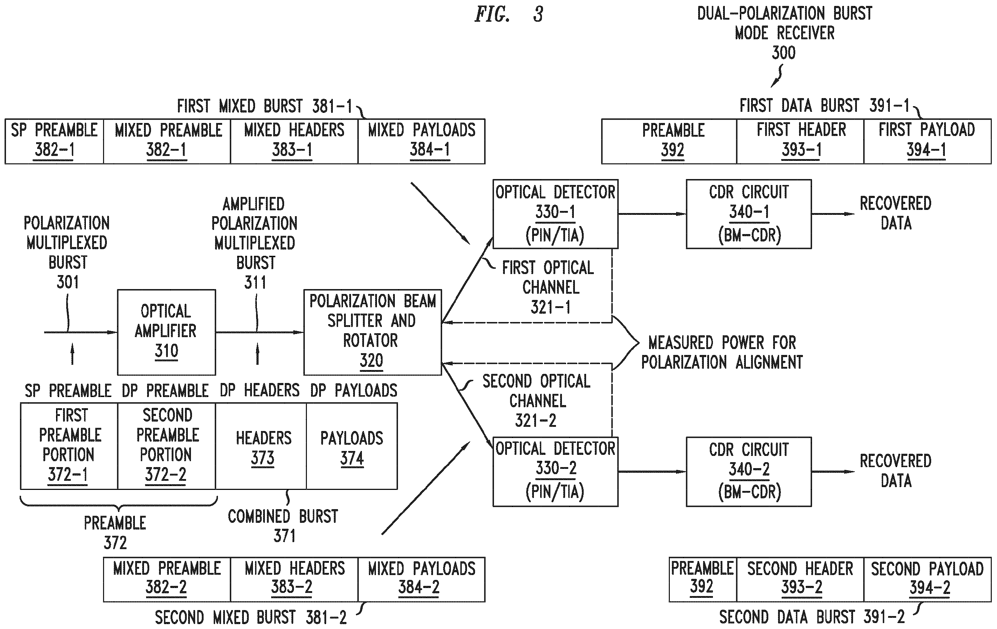

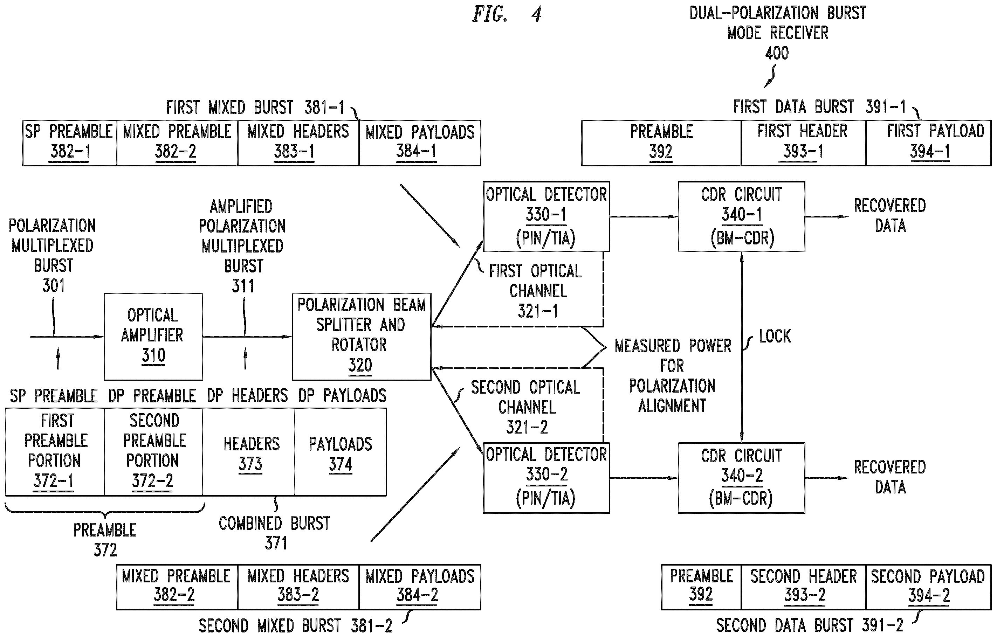

The PON 100 is configured to support burst mode polarization alignment in the upstream direction from the ONUs 120 to the OLT 110. The PON 100 may be configured to support burst mode polarization alignment in the upstream direction from the ONUs 120 to the OLT 110 in a manner for enabling the burst mode receiver 111 at the OLT 110 to align to the polarizations transmitted by the burst mode transmitters 121 at the ONUs 120. The configuration of the PON 100 to support burst mode polarization alignment in the upstream direction from an ONU 120 to the OLT 110 may include support for aligning to the polarizations at the OLT 110 by enabling the burst mode transmitter 121 on the ONU 120 to transmit a preamble on only a first polarization of the dual polarizations to enable fast alignment of the burst mode receiver 111 on the OLT 110 to the dual polarizations and then continuing transmission of the preamble on both polarizations of the dual polarizations to enable further refinement and maintenance of alignment of the burst mode receiver 111 on the OLT 110 to the dual polarizations. The configuration of the PON 100 to support burst mode polarization alignment in the upstream direction from an ONU 120 to the OLT 110 may include support for locking of the clock and data recovery (CDR) elements for the two polarizations to each other at the OLT 110 in order to improve or even optimize the overall burst mode polarization alignment performance. It is noted that an example embodiment of a burst mode transmitter 121 of an ONU 120 configured to support polarization alignment for dual-polarization communications is presented with respect to FIG. 2 and example embodiments of a burst mode receiver 111 of the OLT 110 configured to support polarization alignment for dual-polarization communications are presented with respect to FIG. 3 and FIG. 4.

It will be appreciated that, although primarily focused on configuration of the PON 100 to support particular types of functions for particular types of communications (namely, to support polarization alignment for upstream burst mode communications from ONUs to an OLT in an IM-DD PON), the PON 100 may be configured to support various other functions, may be configured to support various other types of communications, or the like, as well as various combinations thereof).

It will be appreciated that, although primarily focused on configuration of the PON 100 to support polarization alignment for particular types of communications in a particular type of optical communication network (namely, for upstream burst mode communications from ONUs to an OLT in an IM-DD PON), various example embodiments of dual-polarization alignment presented herein may be applied to support polarization alignment for other types of communications (e.g., for continuous mode downstream communications from an OLT to ONUs), may be applied to support polarization alignment in other types of optical communication networks, or the like, as well as various combinations thereof.

FIG. 2 depicts an example embodiment of a dual-polarization burst mode transmitter, for an ONU, which is configured to support burst mode polarization alignment for dual-polarization communications. The dual-polarization burst mode transmitter 200 may be implemented within an ONU for supporting burst mode polarization alignment for dual-polarization communications upstream from the ONU to an associated OLT.

As illustrated in FIG. 2, the dual-polarization burst mode transmitter 200 includes a laser 210, a 1×2 optical coupler 220, a pair of polarization data modulators 230-1 and 230-2 (collectively, polarization data modulators 230), a polarization beam combiner and rotator (PBCR) 240, and a booster optical amplifier (BOA) 250. The laser 210 generates an optical signal 211 at a wavelength λ and provides the optical signal 211 to the 1×2 optical coupler 220. The 1x2 optical coupler 220 splits the optical signal 211 into a first optical signal copy 221-1 which is provided to the polarization data modulator 230-1 and a second optical signal copy 221-2 which is provided to the polarization data modulator 230-2. The polarization data modulator 230-1 modulates the first optical signal copy 221-1 with data for a first polarization P1 to provide a first optical channel 231-1 based on the wavelength λ and the first polarization P1, and provides the first optical channel 231-1 to a first input to the PBCR 240. The polarization data modulator 230-2 modulates the second optical signal copy 221-2 with data for a second polarization P2 to provide a second optical channel 231-2 based on the wavelength λ and the second polarization P2, and provides the second optical channel 231-2 to a second input to the PBCR 240. The PBCR 240 receives the first optical channel 231-1 and the second optical channel 231-2 and combines the first optical channel 231-1 and the second optical channel 231-2, based on polarization multiplexing of the first polarization P1 and the second polarization P2, to provide a polarization multiplexed burst 241 based on the wavelength λ and dual polarizations, and provides the polarization multiplexed burst 241 to the BOA 250. The BOA 250 amplifies the polarization multiplexed burst 241 to provide an amplified polarization multiplexed burst 251. The dual-polarization burst mode transmitter 200 sends the amplified polarization multiplexed burst 251 over an optical fiber toward the dual-polarization burst mode receiver in the OLT.

As illustrated in FIG. 2, the dual-polarization burst mode transmitter 200 is configured to support polarization alignment of the dual polarizations at the associated burst mode receiver. The dual-polarization burst mode transmitter 200 is configured to support polarization alignment of the dual polarizations at the associated burst mode receiver based on transmission of a preamble for upstream transmission of data bursts where a first portion of the preamble is transmitted using the first polarization P1 (enabling alignment to the dual polarizations based on alignment to the first polarization P1) and a second portion of the preamble is transmitted using the first polarization P1 and the second polarization P2 (enabling alignment to the dual polarizations based on the first polarization P1 and the second polarization P2). More specifically, upstream data bursts are transmitted as follows: (1) a first data burst 271-1 (also denoted as Burst A), including the preamble 272, a first header 273-1, and a first payload 274-1 is applied to the polarization data modulator 230-1, which modulates the first optical signal copy 221-1 with the first data burst 271-1 for the first polarization P1 to provide the first optical channel 231-1 based on the wavelength λ and the first polarization P1 and (2) a second data burst 271-2 (also denoted as Burst B), including a portion of the preamble 272, a second header 273-2, and a second payload 274-1 is applied to the polarization data modulator 230-2, which modulates the second optical signal copy 221-2 with the second data burst 271-2 for the second polarization P2 to provide the second optical channel 231-2 based on the wavelength λ and the second polarization P2. The PBCR 240 combines the first optical channel 231-1 and the second optical channel 231-2 to provide the polarization multiplexed burst 241.

As illustrated in FIG. 2, the polarization multiplexed burst 241 includes a preamble 282 that includes a first preamble portion 282-1 that is transmitted based only on polarization P1 (denoted as single-polarization (SP) preamble) and a second preamble portion 282-2 that is transmitted based on both polarization P1 and polarization P2 (denoted as dual-polarization (DP) preamble), a set of headers 283 including the first header 273-1 and the second header 273-2 which are transmitted based on both polarization P1 and polarization P2 (denoted as dual-polarization (DP) headers), and a set of payloads 284 including the first payload 274-1 and the second payload 274-2 which are transmitted based on both polarization P1 and polarization P2 (denoted as dual-polarization (DP) payloads). As illustrated, the preamble 272 of the first data burst 271-1 is longer than the preamble 272 of the second data burst 271-2 because the timing of transmission of the preamble 272 for the first data burst 271-1 and the second data burst 271-2 is controlled so that transmission of the preamble 272 of the first data burst 271-1 using the first polarization P1 begins before transmission of the preamble 272 of the second data burst 271-2 using the second polarization, such that, within the polarization multiplexed burst 241, the first preamble portion 282-1 is based only on polarization P1 and the second preamble portion 282-2 is based on both polarization P1 and polarization P2. As discussed further below, modulation of the preamble 272 to form the preamble 282 in this manner enables polarization alignment at the associated burst mode receiver.

FIG. 3 depicts an example embodiment of a dual-polarization burst mode receiver, for an OLT, which is configured to support burst mode polarization alignment for dual-polarization communications. The dual-polarization burst mode receiver 300 may be implemented within an OLT for supporting burst mode polarization alignment for dual-polarization communications upstream from associated ONUs to the OLT. The dual-polarization burst mode receiver 300 is configured to support burst mode polarization alignment for dual-polarization communications based on transmission of a first portion of a preamble on only a first polarization of the dual polarizations to enable fast alignment of the dual-polarization burst mode receiver 300 to the dual polarizations based on alignment to the first polarization at the dual-polarization burst mode receiver 300 and then continuing transmission of the remaining portion of the preamble on both of the polarizations of the dual polarizations to enable further alignment of the dual-polarization burst mode receiver 300 to the dual polarizations based on alignment to the first polarization and the second polarization at the dual-polarization burst mode receiver 300.

As illustrated in FIG. 3, dual-polarization burst mode receiver 300 includes an optical amplifier 310, a polarization beam splitter and rotator (PBSR) 320, a pair of optical detectors 330-1 - 330-2 (collectively, optical detectors 330) implemented as PIN photodiode (PIN) / transimpedance amplifier (TIA) optical detectors, and a pair of clock and data recovery (CDR) circuits 340-1 - 340-2 (collectively, CDR circuits 340) implemented as burst mode clock and data recovery (BM-CDR) circuits. The optical amplifier 310 receives a polarization multiplexed burst 301 (including two optical channels that have been transmitted based on application of dual-polarization (polarization P1 and polarization P2) to the wavelength λ) via an optical fiber. The optical amplifier 310 amplifies the polarization multiplexed burst 301 to form an amplified polarization multiplexed optical signal 311 and provides the amplified multiplexed optical signal 311 to the PBSR 320. The PBSR 320 splits the two polarizations (P1 and P2) to recover a pair of optical channels 321 that includes a first optical channel 321-1 based on polarization P1 and the wavelength λ and a second optical channel 321-2 based on the second polarization P2 and the wavelength λ. The PBSR 320 provides the first optical channel 321-1 to the optical detector 330-1 and provides the second optical channel 321-2 to the optical detector 330-2. The optical detectors 330 operate as follows: (1) the optical detector 330-1 receives the first optical channel 321-1, outputs a corresponding first output signal 331-1 from the first optical channel 321-1, and provides the first output signal 331-1 to the CDR circuit 340-1 and (2) the optical detector 330-2 receives the second optical channel 321-2, outputs a corresponding second output signal 331-2 from the second optical channel 321-2, and provides the second output signal 331-2 to the CDR circuit 340-2. The CDR circuits 340 operate as follows: (1) the CDR circuit 340-1 receives the first output signal 331-1, recovers the data from the first output signal 331-1 and outputs the recovered data, and recovers the clock signal timing from the first output signal 331-1 for use in controlling alignment to the incoming data signal and (2) the CDR circuit 340-2 receives the second output signal 331-2, recovers the data from the first output signal 331-2 and outputs the recovered data, and recovers the clock signal timing from the first output signal 331-2 for use in controlling alignment to the incoming data signal.

As illustrated in FIG. 3, the dual-polarization burst mode receiver 300 is configured to support polarization alignment of the dual polarizations received from the associated burst mode transmitter. The dual-polarization burst mode receiver 300 is configured to support polarization alignment of the dual polarizations received from the associated burst mode transmitter based on reception of a preamble of a multiplexed data burst where a first portion of the preamble is transmitted using the first polarization P1 and a second portion of the preamble is transmitted using the first polarization P1 and the second polarization P2. More specifically, the dual-polarization burst mode receiver 300 receives the polarization multiplexed burst 301 and uses portions of the preamble of the polarization multiplexed burst 301 to align to the dual polarizations used in the polarization multiplexed burst 301 (e.g., to begin to align to the dual polarizations based on alignment to the first polarization P1 based on the first portion of the preamble and to further refine the alignment to the dual polarizations based on alignment to the first polarization P1 and the second polarization P2 based on the second portion of the preamble). The polarization multiplexed burst 301 is similar to the polarization multiplexed burst 241 that was provided by the dual-polarization burst mode transmitter 200 of FIG. 2; however, when both polarizations travel through the fiber plant, the two polarizations remain orthogonal but rotate such that the polarizations arrive mixed in the polarization multiplexed burst 301 that is received at the dual-polarization burst mode receiver 300.

The optical amplifier 310 receives a combined burst 371 (as polarization multiplexed burst 301), amplifies the combined burst 371 (to provide amplified polarization multiplexed burst 311), and provides the amplified version of the combined burst 371 (again, as amplified polarization multiplexed burst 311) to the PBSR 320. The combined burst 371 that is output by the optical amplifier 310 includes a preamble 372 that includes a first preamble portion 372-1 that is transmitted based only on polarization P1 (denoted as single polarization (SP) preamble) and a second preamble portion 372-2 that is transmitted based on both polarization P1 and polarization P2 (denoted as dual-polarization (DP) preamble), a set of headers 373 which are transmitted based on both polarization P1 and polarization P2 (denoted as dual-polarization (DP) headers), and a set of payloads 374 which are transmitted based on both polarization P1 and polarization P2 (denoted as dual-polarization (DP) payload).

The PBSR 320 splits the combined burst 371 such that (1) the first optical channel 321-1 includes a first mixed burst 381-1 which is provided to the first path including the optical detector 330-1 and the CDR circuit 340-1 for extraction of a first data burst and (2) the second optical channel 321-2 includes a second mixed burst 381-2 which is provided to the second path including the optical detector 330-2 and the CDR circuit 340-2 for extraction of a second data burst. The first mixed burst 381-1 provided from the PBSR 320 to the optical detector 330-1 includes an SP preamble 382-1 (including the first preamble portion 372-1 of the preamble 372 based only on polarization P1), a mixed preamble 382-2 (including the second preamble portion 372-2 of the preamble 372 based on both polarization P1 and polarization P2), mixed headers 383-1 (including mixing of the headers of the two data bursts based on both polarization P1 and polarization P2), and mixed payloads 384-1 (including mixing of the payloads of the two data bursts based on both polarization P1 and polarization P2). The second mixed burst 381-2 provided from the PBSR 320 to the optical detector 330-2 includes the mixed preamble 382-2 (including the second preamble portion 372-2 of the preamble 372 based on both polarization P1 and polarization P2), the mixed headers 383-1 (including mixing of the headers of the two data bursts based on both polarization P1 and polarization P2), and the mixed payloads 384-1 (including mixing of the payloads of the two data bursts based on both polarization P1 and polarization P2), and excludes the SP preamble 382-1 (including the first preamble portion 372-1 of the preamble 372 based only on polarization P1).

The optical detectors 330 and CDR circuits 340 of the optical detector and recovery paths receive the mixed bursts 381 and recover data bursts sent by the dual-polarization burst mode transmitter, respectively. The first data burst 391-1, which is detected and recovered from the mixed burst 381-1 by the first optical detector and recovery path that includes the optical detector 330-1 and the CDR circuit 340-1, includes a preamble 372 (which includes the first preamble portion 372-1 that is transmitted based only on polarization P1 and the second preamble portion 372-2 that is transmitted based on both polarization P1 and polarization P2), a first header 393-1, and a first payload 394-1 which is based on the wavelength λ and the first polarization P1. The first data burst 391-1 that is recovered is the first data burst sent by the dual-polarization burst mode transmitter (e.g., the first data burst 271-1 sent by the dual-polarization burst mode transmitter 200 of FIG. 2). The second data burst 391-2, which is detected and recovered from the mixed burst 381-2 by the second optical detector and recovery path that includes the optical detector 330-2 and the CDR circuit 340-2, includes a portion of the preamble 272 (including the second preamble portion 372-2 that is transmitted based on both polarization P1 and polarization P2), a second header 393-2, and a second payload 394-1 which is based on the wavelength λ and the second polarization P2. The second data burst 391-2 that is recovered is the second data burst sent by the dual-polarization burst mode transmitter (e.g., the second data burst 271-2 sent by the dual-polarization burst mode transmitter 200 of FIG. 2).

The dual-polarization burst mode receiver 300, as indicated above, is configured to support polarization alignment of the dual polarizations received from the associated burst mode transmitter. The PBSR 320 provides the first mixed burst 381-1 to the first path including the optical detector 330-1 and the CDR circuit 340-1 and provides the second mixed burst 381-2 to the second path including the optical detector 330-2 and the CDR circuit 340-2. The PBSR 320, during the SP preamble 381-1, rotates the polarization until polarization alignment of the dual polarizations is achieved. The optical detectors 330 provide measured power feedback to the PBSR 320 for use by the PBSR 320 in rotating the dual polarizations until polarization alignment of the dual polarizations is achieved (e.g., until the optical detector 330-1 indicates that zero power is received). The CDR circuit 340-1 will detect the SP preamble 382-1 correctly before the dual polarizations are fully aligned and can lock to the first data burst 391-1 based on this initial alignment to the dual polarizations based on the first polarization P1 of the SP preamble 382-1 (which corresponds to the first preamble portion 372-1 of the preamble 372). The CDR circuit 340-2 can then lock to the second data burst 391-2 based on alignment to the dual polarizations (e.g., further refining polarization alignment or maintaining polarization alignment, depending on whether full polarization alignment was achieved during reception of the first preamble portion 372-1 of the preamble 372) based on the first polarization P1 of the SP preamble 382-1 (which corresponds to the first preamble portion 372-1 of the preamble 372) and to align to the second polarization P2 of the mixed preamble 382 (which corresponds to the second preamble portion 372-2 of the preamble 372). Additionally, it is noted that, after the initial burst mode polarization alignment of the dual polarizations during the SP preamble 381-1 and, where full polarization alignment is not achieved during the SP preamble 381-1, during at least part of the SP preamble 381-2, the dual polarizations can be tracked during the rest of the data bursts 391 by keeping the power of the optical detectors 330 the same. In this manner, the dual-polarization burst mode receiver 300 is configured to support polarization alignment of the dual polarizations received from the associated burst mode transmitter.

FIG. 4 depicts an example embodiment of a dual-polarization burst mode receiver, for an OLT, which is configured to support burst mode polarization alignment for dual-polarization communications. The dual-polarization burst mode receiver 400 may be implemented within an OLT for supporting burst mode polarization alignment for dual-polarization communications upstream from associated ONUs to the OLT. The dual-polarization burst mode receiver 400 is configured to support burst mode polarization alignment for dual-polarization communications based on locking of the clock and data recovery (CDR) elements for the dual polarizations at the dual-polarization burst mode receiver 400 in order to improve or even optimize the overall burst mode polarization alignment performance based on transmission of different portions of a preamble using a single polarization and dual polarizations, respectively.

As illustrated in FIG. 4, the dual-polarization burst mode receiver 400 is configured in a manner similar to the dual-polarization burst mode receiver 300 of FIG. 3. Namely, the dual-polarization burst mode receiver 400 includes the optical amplifier 310, the PBSR 320, the optical detectors, and the CDR circuits 340. The CDR circuit 340-1 will achieve lock on the data burst during the SP preamble 381-1 and, therefore, automatically lock the CDR circuit 340-2 as well so that both CDR circuits 340 are locked to the data as soon as the data in both polarizations is received (i.e., as compared with the implementation of FIG. 3 in which locking of the CRD circuits 340 is not used, the DP preamble 381-2 can be shorter or may not be needed at all in FIG. 4). It will be appreciated that the locking of the CDR circuit 340-1 and the CDR circuit 340-2 to each other in this manner improves the overall polarization alignment of the dual polarizations at the dual-polarization burst mode receiver 400 and, thus, also the locking of the CDR circuits 340 to the data bursts at the dual-polarization burst mode receiver 400.

It will be appreciated that various example embodiments of dual-polarization alignment, although primarily presented above within the context of supporting dual-polarization alignment within a particular optical communication context (namely, for burst mode communications within a PON that utilizes IM-DD techniques), may be adapted to support dual-polarization alignment in various other optical communication contexts (e.g., for continuation mode communications or other types of optical communication modes, within optical communication networks based on coherent detection or other types of optical detection techniques, within other types of optical communication networks, or the like, as well as various combinations thereof) and, accordingly, various example embodiments of dual-polarization alignment are presented more generally further below within the context of more general optical communication systems and method flows configured for use within the context of more general optical communication systems.

In at least some example embodiments, dual-polarization alignment may be supported within the context of continuous mode transmission within an optical communication network. For example, for continuous mode, a part of the downstream frame (e.g., FS payload) intended for all ONUs can be transmitted in a single polarization. This can help to align the polarization for a new/joining ONU, and also can help for the continuous polarization tracking of ONUs during operation if it can be periodically optimized/aligned to one polarization.

In at least some example embodiments, dual-polarization alignment may be supported within the context of optical communications based on direct detection. For example, for direct detection (DD), polarization alignment and tracking needs to be done in the optical domain. In order to extend the scalability of DD formats without relying on costly coherent receivers, 3D Stokes-vector-modulation direct-detection (SVM-DD) receivers have been proposed. For these type of receivers polarization tracking can be performed by means of digital signal processing (DSP) in the electrical domain. The startup time of polarization tracking in the DSP can be significantly reduced by transmission and alignment of one polarization first. This will help for burst-mode operation to significantly reduce the overhead.

In at least some example embodiments, dual-polarization alignment may be supported within the context of optical communications based on coherent detection. For example, for coherent detection, continuous polarization tracking is usually performed by means of digital signal processing in the electrical domain. The startup time of polarization tracking in the DSP can be significantly reduced by transmission and alignment of one polarization first. This will help for burst-mode operation to significantly reduce the overhead.

It will be appreciated that various example embodiments of dual-polarization alignment may be provided within various other optical communication contexts supporting various other types of optical communications capabilities and, accordingly, various example embodiments of dual-polarization alignment are presented more generally further below within the context of more general optical communication systems and method flows configured for use within the context of more general optical communication systems.

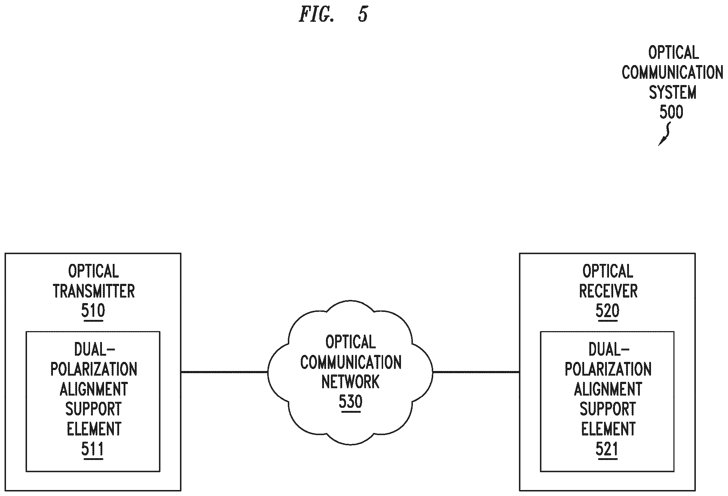

FIG. 5 depicts an example embodiment of an optical communication system configured to support polarization alignment for dual-polarization communications.

The optical communication system 500 may be any optical communication system configured to support dual-polarization based optical communications. For example, the optical communication system 500 may include an optical access network (e.g., a PON or other suitable type of optical access network), an optical backhaul network, an optical core network, an optical network within a private communication system (e.g., a datacenter network, an enterprise network, or the like), or the like, as well as various combinations thereof. For example, the optical communication system 500 may be configured to support dual-polarization based optical communications using various optical communications technologies or capabilities (e.g., direct detection or coherent detection, burst mode communication or continuous mode communication, or the like, as well as various combinations thereof). The optical communication system 500 may include various other types of optical communication networks, various other types of optical communications technologies or capabilities, or the like, as well as various combinations thereof. The optical communication system 500, which includes an optical transmitter 510 and an optical receiver 520 connected via an optical communication network 530, is configured to support polarization alignment for dual-polarization communications from the optical transmitter 510 to the optical receiver 520 via the optical communication network 530.

The optical transmitter 510 is configured to support dual-polarization transmissions to the optical receiver 520 using a first polarization and a second polarization, where the optical transmitter 510 is configured to transmit a data segment toward the optical receiver 520, and where the optical transmitter 510 is configured to transmit a first portion of the data segment toward the optical receiver 520 using the first polarization and to transmit a second portion of the data segment toward the optical receiver 520 using the first polarization and the second polarization. The optical transmitter 510 includes a dual-polarization alignment support element 511 configured to support various example embodiments presented herein for enabling an optical transmitter such as the optical transmitter 510 to support polarization alignment at the optical receiver 520 for dual-polarization communications from the optical transmitter 510 to the optical receiver 520 (where the dual-polarization alignment support element 511 may be implemented in various ways depending on the underlying optical communications context of the optical communication system 500 (e.g., direct detection versus coherent detection, burst mode versus continuous mode, and so forth).

The optical receiver 520 is configured to support reception of dual-polarization communications from the optical transmitter 510 based on a first polarization and a second polarization, where optical receiver 520 is configured to align to the dual polarizations based on reception of a first portion of a data segment communicated using the first polarization (e.g., to initiate alignment and, possibly, achieve alignment based on reception of the first portion of the data segment communicated using the first polarization) and based on reception of a second portion of the data segment communicated using the first polarization and the second polarization (e.g., to continue to further pursue alignment, to further refine a previously achieved alignment, and/or to maintain a previously achieved alignment based on reception of the second portion of the data segment communicated using the first polarization and the second polarization). In other words, alignment to the dual polarizations may be achieved and maintained based on reception of the first portion of the data segment communicated using the first polarization and based on reception of the second portion of the data segment communicated using the first polarization and the second polarization. The optical receiver 520 includes a dual-polarization alignment support element 521 configured to support various example embodiments presented herein for enabling an optical receiver 520 such as the optical receiver 520 to support polarization alignment at the optical receiver 520 for dual-polarization communications from the optical transmitter 510 to the optical receiver 520 (where the dual-polarization alignment support element 521 may be implemented in various ways depending on the underlying optical communications context of the optical communication system 500 (e.g., direct detection versus coherent detection, burst mode versus continuous mode, and so forth).

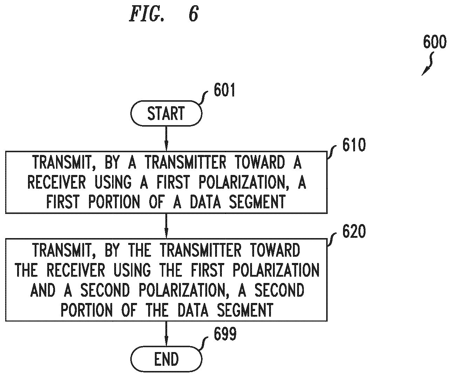

FIG. 6 depicts an example embodiment of a method for use by a transmitter for supporting polarization alignment for dual-polarization communications. It will be appreciated that, although primarily presented as being performed serially, at least a portion of the functions of the method 600 may be performed contemporaneously or in a different order than as presented with respect to FIG. 6. At block 601, the method 600 begins. At block 610, transmit, by a transmitter toward a receiver using a first polarization, a first portion of a data segment. At block 620, transmit, by the transmitter toward the receiver using the first polarization and a second polarization, a second portion of the data segment. At block 699, the method 600 ends.

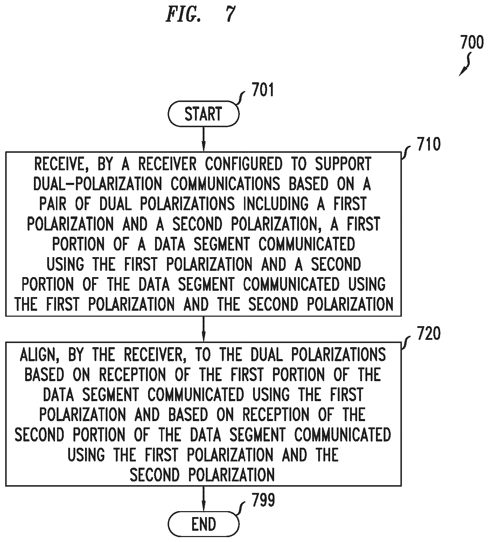

FIG. 7 depicts an example embodiment of a method for use by a receiver for supporting polarization alignment for dual-polarization communications. It will be appreciated that, although primarily presented as being performed serially, at least a portion of the functions of the method 700 may be performed contemporaneously or in a different order than as presented with respect to FIG. 7. At block 701, the method 700 begins. At block 710, receive, by a receiver configured to support dual-polarization communications based on a pair of dual polarizations including a first polarization and a second polarization, a first portion of a data segment communicated using the first polarization and a second portion of the data segment communicated using the first polarization and the second polarization. At block 720, align, by the receiver, to the dual polarizations based on reception of the first portion of the data segment communicated using the first polarization and based on reception of the second portion of the data segment communicated using the first polarization and the second polarization. At block 799, the method 700 ends.

Various example embodiments for supporting polarization alignment for dual-polarization communications may provide various advantages or potential advantages. For example, various example embodiments for supporting polarization locking for dual-polarization communications may be configured to support fast polarization alignment for burst mode communications (e.g., for US transmissions from ONUs to an OLT in a PON). For example, various example embodiments for supporting polarization alignment for dual-polarization communications may be configured to support more robust dual polarization communications in the continuous mode downstream, since it can help to align the polarization for a new/joining ONU but also can aid the continuous polarization tracking of ONUs during operation if it can periodically optimize/align to one polarization. For example, various example embodiments for supporting polarization alignment for dual-polarization communications may be configured to support more robust dual polarization communications in various other optical communication contexts within which dual polarization optical communications may be employed. It will be appreciated that various example embodiments for supporting polarization alignment for dual-polarization communications may be configured to provide various other advantages or potential advantages.

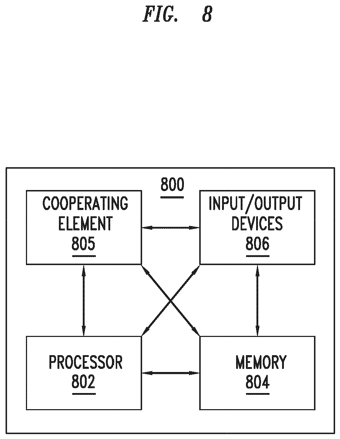

FIG. 8 depicts an example embodiment of a computer suitable for use in performing various functions presented herein.

The computer 800 includes a processor 802 and a memory 804. The processor 802 may be a processing unit (e.g., a central processing unit (CPU), a graphics processing unit (GPU), or the like) having one or more cores, a core of a processing unit, or the like. The memory 804 may be a random access memory (RAM), a read-only memory (ROM), or the like. In at least some example embodiments, the computer 800 may include at least one processor (e.g., processor 802) and at least one memory (e.g., memory 804) storing instructions that, when executed by the at least one processor, cause the computer 800 to perform various functions presented herein.

The computer 800 also may include a cooperating element 805. The cooperating element 805 may be hardware, firmware, software, or various combinations thereof. The cooperating element 805 may be a process that can be loaded into the memory 804 and executed by the processor 802 to implement various functions presented herein (in which case, for example, the cooperating element 805 (including associated data structures) can be stored on a non-transitory computer readable medium, such as a storage device or other suitable type of storage element (e.g., a magnetic drive, an optical drive, or the like)).

The computer 800 also may include one or more input/output devices 806. The input/output devices 806 may include one or more of a user input device (e.g., a keyboard, a keypad, a mouse, a microphone, a camera, or the like), a user output device (e.g., a display, a speaker, or the like), one or more network communication devices or network communication elements (e.g., an input port, an output port, a receiver, a transmitter, a transceiver, or the like), one or more storage devices (e.g., a tape drive, a floppy drive, a hard disk drive, a solid state drive, or the like), or the like, as well as various combinations thereof.

It will be appreciated that computer 800 may represent a general architecture and functionality suitable for implementing functional elements described herein, portions of functional elements described herein, or the like, as well as various combinations thereof. For example, the computer 800 may provide a general architecture and functionality that is suitable for implementing one or more elements presented herein. For example, the computer 800 may provide a general architecture and functionality that is suitable for implementing at least one of an OLT or a portion thereof, an ONU or a portion thereof, an optical transmitter or a portion thereof, an optical receiver or a portion thereof, an optical transceiver or a portion thereof, an optical communication device or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A transmitter (121, 200, 510) configured to support dual-polarization transmissions using a first polarization and a second polarization, wherein the transmitter (121, 200, 510) is configured to transmit a data segment toward a receiver (111, 300, 400, 520), wherein the transmitter (121, 200, 510) is configured to transmit a first portion of the data segment toward the receiver (111, 300, 400, 520) using the first polarization and to transmit a second portion of the data segment toward the receiver using the first polarization and the second polarization.

2. The transmitter (121, 200, 510) according to claim 1, wherein the transmitter (121, 200, 510) is configured to transmit the data segment toward the receiver (111, 300, 400, 520) using a burst mode transmission.

3. The transmitter (121, 200, 510) according to claim 2, wherein the data segment is a preamble for the burst mode transmission.

4. The transmitter (121, 200, 510) according to any of the preceding claims, wherein the transmitter (121, 200, 510) is configured to transmit the data segment toward the receiver (111, 300, 400, 520) using a continuous mode transmission.

5. The transmitter (121, 200, 510) according to claim 4, wherein the data segment is a polarization alignment data segment.

6. The transmitter (121, 200, 510) according to any of the preceding claims, wherein the transmitter (121, 200, 510) is configured to transmit the first portion of the data segment and the second portion of the data segment toward the receiver (111, 300, 400, 520) using a common wavelength.

7. The transmitter (121, 200, 510) according to any of the preceding claims, wherein the first polarization and the second polarization originate from a common transmit clock.

8. The transmitter (121, 200, 510) according to any of the preceding claims, wherein transmission of the first portion of the data segment begins before transmission of the second portion of the data segment begins.

9. The transmitter (121, 200, 510) according to any of the preceding claims, wherein the transmitter includes:
a laser (210) source;
a first modulator (230) configured to modulate the data segment with the first polarization to form a first optical signal;
a second modulator (230) configured to modulate the data segment with the second polarization to form a second optical signal; and
a combiner (240) configured to combine the first optical signal and the second optical signal to form a combined optical signal for transmission toward the receiver.

10. A method, comprising:
transmitting, by a transmitter (121, 200, 510) toward a receiver using a first polarization, a first portion of a data segment; and
transmitting, by the transmitter (121, 200, 510) toward the receiver using the first polarization and a second polarization, a second portion of the data segment.

11. A receiver (111, 300, 400, 520) configured to support reception of dual-polarization communications based on a pair of dual polarizations including a first polarization and a second polarization, wherein the receiver (111, 300, 400, 520) is configured to align to the dual polarizations based on reception of a first portion of a data segment communicated using the first polarization and based on reception of a second portion of the data segment communicated using the first polarization and the second polarization.

12. The receiver according to claim 11, wherein the receiver (111, 300, 400, 520) is configured to initiate an alignment to the dual polarizations based on reception of the first portion of the data segment communicated using the first polarization and to further refine or maintain the alignment to the dual polarizations based on reception of the second portion of the data segment communicated using the first polarization and the second polarization.

13. The receiver according to any of claims 11 to 12, wherein the receiver (111, 300, 400, 520) is configured to begin tracking of the dual polarizations during reception of the second portion of the data segment communicated using the first polarization and the second polarization.

14. The receiver according to any of claims 11 to 13, wherein the data segment is associated with transmission of a first data burst and a second data burst, wherein the receiver is configured to support locking of a first clock and data recovery circuit of the receiver to the first data burst during reception of the first portion of the data segment communicated using the first polarization and locking of a second clock and data recovery circuit of the receiver to the second data burst during reception of the first portion of the data segment communicated using the first polarization.

15. A method, comprising:
receiving, by a receiver configured to support dual-polarization communications based on a pair of dual polarizations including a first polarization and a second polarization, a first portion of a data segment communicated using the first polarization and a second portion of the data segment communicated using the first polarization and the second polarization; and
aligning, by the receiver, to the dual polarizations based on reception of the first portion of the data segment communicated using the first polarization and based on reception of the second portion of the data segment communicated using the first polarization and the second polarization.
